# EUROPEAN PATENT APPLICATION

(11) **EP 1 169 909 A1**
(43) Date of publication of application: **09.01.2002**
(21) Application number: 01201618.4
(22) Date of filing: 04.05.2001
(51) Int. Cl.: A01D 78/10

(54) **An implement for displacing crop, such as grass of hay for example**

(30) Priority: 27.06.2000 NL 1015538
(71) Applicant: Lely Enterprises AG, 6300 ZUG (CH)
(72) Inventor: Van Den, Engel, Alfonsus Jacobus, 3123 CM Schiedam (NL)
(74) Representative: Corten, Maurice Jean F.M.

(57) **Abstract**

The invention relates to an implement for displacing crop, such as grass or hay, said implement comprising a frame 2 provided with a rake 5 with rake members 7 that are suitable for depositing the crop to be displaced into a swath. The frame 2 is further provided with a motor-drivable tedder 6 with tedder members 13 that are suitable for spreading the crop deposited into a swath over the ground of a parcel to be treated.

## Description

The invention relates to an implement for displacing crop, such as grass or hay for example, said implement comprising a frame provided with a rake with rake members that are suitable for depositing the crop to be displaced into a swath.

Such an implement is known.

It is an objective of the invention to improve such an implement.

In accordance with the invention this is achieved in that the frame is further provided with a motor-drivable tedder with tedder members that are suitable for spreading the crop to be deposited into a swath over the ground of a parcel to be treated. Although, on first thoughts, it seems contradictory first to deposit the crop into a swath by means of a rake and then to spread it again with the aid of a tedder over the ground of a parcel to be treated, the above-mentioned implement offers numerous advantages relative to the known tedder. A drawback of the known tedder is for example that it is provided with tedder tines which are per se particularly suitable for spreading the crop, but have in relation to rake tines the disadvantage of picking up less well the crop from the ground. In the implement according to the invention, on the contrary, the crop is raked together into a swath by means of rake tines, whereafter the crop formed into a swath is spread out over a parcel with the aid of the tedder tines. It will be obvious that the crop deposited into a swath will be picked up better by the tedder tines than when it has been spread out over a parcel. A further advantage of the above-mentioned implement according to the invention is that, in relation to the known tedder, there are required less tedder members for the same to be tedded working width, as by means of the rake members the crop can be raked together over a relatively large working width and then be spread again with this smaller number of tedder members. A further advantage of the implement according to the invention is that the crop to be displaced becomes less dirty than when it is spread by means of the known tedder having the same working width as the implement according to the invention. The latter advantage is a result of the fact that raking machines work much more cleanly than tedding machines.

According to an inventive feature, the tedder tines are designed as hookshaped tines. In particular hookshapes tines, which are applied for example to Lely-tedders, prove to show in practice an excellent tedding pattern. This is inter alia a result of the fact that hookshaped tines have the characteristic of taking along crop in their circular path for a longer time, so that, in relation to straight tines, they ted the crop over a broader area.

According to again another inventive feature, the rake and/or the tedder can be displaced relative to the frame for being brought from a working position into a transport position and vice versa. As a result thereof it is possible only to perform raking and/or tedding with the implement. For the purpose of tedding swaths with a relatively large volume, the tedder is provided with an rpm-variator which is preferably capable of being switched on and off and by means of which the number of revolutions per minute at which the tedder members rotate can be varied. In a preferred embodiment of the invention the working width of the rake is approximately 3 to 4 times as large as the working width of the tedder. According to again another inventive feature, seen in the direction of travel of the implement, the tedder is fitted to the frame behind the rake in the middle thereof. In a preferred embodiment of the invention, the rake is motor-drivable. According to a further inventive feature, the rake comprises at least two rake members and the tedder comprises at least two tedder members.

The invention also relates to a method of treating mowed crop, such as grass for example, in which method the crop to be treated is raked together into a swath by means of a rake and is then immediately thereafter spread out again over the parcel to be treated with the aid of a tedder which constitutes part of the same implement.

The invention will now be explained in further detail on the basis of an accompanying drawing.

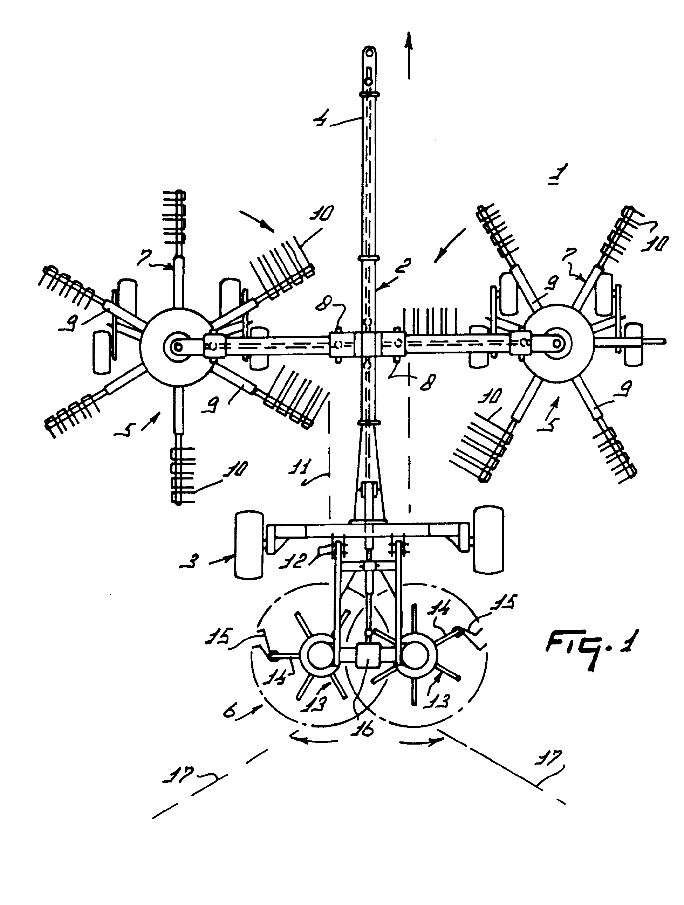

Figure 1 is a plan view of the implement according to the invention.

Figure 1 is a plan view of a raking/tedding machine 1 comprising a frame 2 with a wheel set 3 and a drawbar 4 which can be coupled to a (non-shown) vehicle, such as a tractor for example. The raking/tedding machine 1 comprises a rake 5 and a tedder 6. The rake 5 comprises two rake members 7 which are disposed on both sides of the drawbar 4 and which can be pivoted about the horizontal axes 8 from the depicted working position into a transport position. Seen in the direction of travel of the implement, the wheels of the wheel set 3 are located in a vertical plane between the rake and tedder members. The rake 5 and the tedder 6 are motor-drivable via a (non-shown) transmission. The rake members 7 comprise tine arms 9 which are controlled by a curve track and which are provided at their end with rake tines 10. By means of the rake members 7 it is possible to deposit a swath which is shown schematically in Figure 1 by the broken lines 11. As already mentioned in the foregoing, the raking/tedding machine 1 is further provided with a tedder 6 which, seen in the direction of travel of the raking/tedding machine 1, is located behind the rake 5 in the middle thereof. The tedder 6 is also pivotable about horizontal axes 12 from the depicted working position into a transport position. The tedder 6 comprises two tedder members 13 which are arranged side by side. Each of the tedder members 13 is provided with a plurality of tine arms 14 with hookshaped tines 15 at the end thereof. The number of revolutions per minute of the tedder members 13 is adjustable by means of an rpm-variator 16. With the aid of the tedder 6 the swath 11 is shaken out and spread as shown in Figure 1 by the lines 17.

## Claims

1. An implement for displacing crop, such as grass or hay for example, said implement comprising a frame (2) provided with a rake (5) with rake members (7) that are suitable for depositing the crop to be displaced into a swath, **characterized in that** the frame (2) is further provided with a motor-drivable tedder (6) with tedder members (13) that are suitable for spreading the crop deposited into a swath over the ground of a parcel to be treated.

2. An implement as claimed in claim 1, **characterized in that** the rake members (7) are equipped with rake tines (10) and the tedder members (13) are equipped with tedder tines (15).

3. An implement as claimed in claim 2, **characterized in that** the tedder tines (15) are designed as hookshaped tines (15).

4. An implement as claimed in any one of the preceding claims, **characterized in that** the rake (5) and/or the tedder (6) can be displaced relative to the frame (2) for being brought from a working position into a transport position and vice versa.

5. An implement as claimed in any one of the preceding claims, **characterized in that** the tedder (6) is provided with an rpm-variator (16) which is preferably capable of being switched on and off and by means of which the number of revolutions per minute at which the tedder members (13) rotate can be varied.

6. An implement as claimed in any one of the preceding claims, **characterized in that** the working width of the rake (5) is substantially larger than and preferably approximately 3 to 4 times as large as the working width of the tedder (6).

7. An implement as claimed in any one of the preceding claims, **characterized in that**, seen in the direction of travel of the implement, the tedder (6) is fitted to the frame (2) behind the rake (5) in the middle thereof.

8. An implement as claimed in any one of the preceding claims, **characterized in that** the rake (5) is motor-drivable.

9. An implement as claimed in any one of the preceding claims, **characterized in that** the rake (5) comprises at least two rake members (7) and the tedder (6) comprises at least two tedder members (13).

10. A method of working mowed crop, such as grass for example, in which method the crop to be treated is raked together into a swath by means of a rake (5) and is then immediately thereafter spread out again over the parcel to be treated with the aid of a tedder (6).
